# EUROPEAN PATENT APPLICATION

(11) **EP 4 574 574 A1**
(43) Date of publication of application: **25.06.2025**
(21) Application number: 23218985.2
(22) Date of filing: 21.12.2023
(51) Int. Cl.: B60R 9/052, B60R 9/058

(54) **SUPPORT FOOT AND LOAD CARRIER BAR**

(71) Applicant: Mont Blanc Industri AB, 516 90 Dalsjöfors (SE)
(72) Inventor: Olsén, Jonas, 51444 Länghem (SE); Westberg, Petrus, 50457 Borås (SE)
(74) Representative: AWA Sweden AB

(57) **Abstract**

The disclosure relates to a support foot (10) for a load carrier (2) adapted to be mounted on a vehicle roof, the support foot (10) comprising:
a body (20) configured to be connected to the load carrier (2), and comprising a vehicle support (23) surface configured to rest against a first surface (1a) of the vehicle; a bracket (30) having a clamping portion (31) configured to clamp a second surface (1b) of the vehicle (1), and
a lever (60) rotationally connected to the body (20) and having a fastening position and an unfastening position, a first connection member (41) and a second connection member (50), wherein the first connection member (41) is attached to the lever (60) and rotationally connected to the second connection member (50) via a rotation pin (42); wherein the second connection member (50) is connected to the bracket (30), wherein the rotation pin (42) is slidably arranged in a guide (24) so as to direct movement of the bracket (30) in relation to the body (20) and such that bringing of the lever (60) to said fastening position moves the first connection member (41) so as to apply a force acting along a longitudinal axis (L) of the second connection member (50) so as to fix the position of the clamping portion (31) in relation to the body (20).

## Description

### Field of invention

The invention relates to a support foot adapted to be mounted on a vehicle roof, and a load carrier bar comprising such a foot.

### Technical Background

Load carrier bars are mounted on the roof of a vehicle by means of support feet to facilitate transportation of bulky and cumbersome goods, such as bicycles or roof boxes. The support feet are most often mounted perpendicular relative to the longitudinal direction of the vehicle, wherein the load carrier bars extend in the transversal direction across the roof of the vehicle.

There is a range of different support feet available on the market. However, a common problem among the existing support feet is that they have a limited working range of the clamping portion, which results in the support feet being only usable to a specific, or a few specific, car models. Thus, the support feet have to be changed if the load carrier bar is to be mounted on another car model.

Moreover, existing support feet adapted to be mounted on different car models, most often require several adjusting activities to fixate the foot relative to the vehicle, resulting in a tedious fastening process for the user. Further, these adaptable feet tend to comprise many components, which results in expensive and inefficient manufacturing processes.

It is desirable that a support foot is adapted to be mounted on a variety of car models. Moreover, it is desirable that the support foot is adapted to be mounted in a user-friendly manner, such as clamping the support foot onto the roof by actuating a lever or another clamping facilitating mechanism.

### Summary

It is an object of the invention to provide a support foot addressing at least some of the design criteria that the support foot should be easy to mount on the roof of a vehicle, it should be configured to be used on a variety of car models without the need of interchanging specific parts, and comprise as few component as possible while still ensuring secure fastening of the support foot. This and other objects which will be evident from the following description and achieved by a support foot for a load carrier adapted to be mounted on a vehicle roof having the features defined in claim 1.

According to a first aspect of the present disclosure, a support foot for a load carrier adapted to be mounted on a vehicle roof is provided, the support foot comprising: a body having a first portion configured to be connected to the load carrier, and a second portion comprising a vehicle support surface configured to rest against a first surface of the vehicle; a bracket having a clamping portion configured to clamp a second surface of the vehicle, and a fastening arrangement, the fastening arrangement comprising a lever rotationally connected to the body and having a fastening position and an unfastening position, a first connection member and a second connection member, the second connection member having a longitudinal axis, wherein the first connection member comprises a first portion attached to the lever and a second portion rotationally connected to a first distal end of the second connection member via a rotation pin having an axis of rotation transverse to the longitudinal axis of the second connection member; wherein the second connection member, at a second distal end thereof, is connected to the bracket, wherein the rotation pin is slidably arranged in a guide so as to direct movement of the bracket in relation to the body and wherein the fastening arrangement is configured such that bringing of the lever to said fastening position moves the first connection member so as to apply a force acting along the longitudinal axis of the second connection member so as to fix the position of the clamping portion in relation to the body.

An advantage of the support foot as described above is that it comprises relatively few components, which provides a support foot which is relatively cheap to produce and easy to use.

Another advantage is that the support foot is adaptable to a broad range of vehicle models, at least for the reason that the second connection member is rotationally connected to the first connection member so as to enable angular adjustment of the second connection member in relation to the body, and at least for the reason that the rotation pin is slidably arranged in the guide such that the clamping portion is ensured to be in its fixed position when said lever is in said fastening position.

The support foot may be mounted along an edge of the vehicle roof extending in a longitudinal direction of the vehicle, and is configured to be connected to another support foot arranged along an opposite edge of the vehicle roof, via a load carrier.

The body and its first portion, which may be an upper portion of the body, may be connected to a load carrier by e.g., screws, clamp holders, or any other type of commonly known load carrier fastening mechanism.

The first surface of the vehicle refers to a surface of the vehicle roof facing the ambient. Similarly, the second surface may also be referred to a surface of the vehicle roof which, at least partially, faces the ambient.

The vehicle support surface of the body may be configured to rest against the first surface in the proximity of the longitudinally extending edge of the vehicle roof.

The vehicle support surface may be a rubber detail which may be interchangeable, or the vehicle support surface and the body may be a single unit made out of the same material, e.g., stainless steel, aluminum, another type of metal, or plastic.

The clamping portion is configured to clamp a second surface of the vehicle, wherein the second surface may be a surface arranged in the doorframe of the vehicle chassis.

An advantage of having the support foot being mounted on the vehicle roof by abutting the roof at the first surface and then by arranging the clamping portion such that it clamps on to the second surface, is inter alia that a roof rail is not necessary. Hereby, vehicles that are not equipped with a roof rail may still be provided with a load carrier utilizing a support foot according to the first aspect.

The clamping portion may be releasably connected to the bracket such that the clamping portion is interchangeable so as to provide additional adaptation possibilities. This possibility may be desired if the support foot is to be mounted on a special car model which differs significantly from other more common car models.

The clamping portion may be connected to a first end portion of the bracket.

Alternatively, the clamping portion and the bracket may be a single unit.

The first connection member may have an elongated body which extends along said longitudinal axis of the second connection member.

The first and second portion of the first connection member may be arranged at a respective opposite end portion of the elongated body.

To provide enhanced stability to the support foot, the foot may comprise two respective first connection members arranged in parallel and being connected to each other by the rotation pin.

The term "guide" in the context of the present invention refers to any type of track facilitating a predetermined pathway for a part arranged to be directed by the track.

The guide may be formed as a slit, an indentation, an elongated perforation, or any other type of arrangement which is suitable to form a track which the pin may be arranged in.

The guide may be arranged in the body and extend in a longitudinal direction of the body. Alternatively, the guide may be arranged in an intermediate guide member arranged to be connected to the body of the support foot.

That the rotation pin is slidably arranged in a guide so as to direct movement of the bracket in relation to the body is to be understood as the rotation pin, arranged at the second portion of the first connection member, is to be guided, by the guide, to follow a pre-determined path set by the shape of the guide such that the bracket's position, relative to the body, is adjusted.

An advantage of having a guide that directs, and therefore to some extent limits, the bracket's movement is that it ensures an angular relationship between the rotation pin's position and the first portion of the first connection member such that the clamping portion is secured in its fixed position when the lever is brought into its fastening position.

The guide may be linear. Alternatively, the guide maybe formed to have a curved, curvilinear, wavy, or any other suitable shape.

The lever is rotationally connected to the body of the support foot by e.g., a pin, or an indentation in the body corresponding to a perforation of the lever, or vice versa, such that the perforation may be inserted into the indentation and be rotated therein.

The lever has a fastening position and an unfastening position so as to set the clamping portion in a fixed position and an unfixed position. When said lever is brought to said fastening position, a force, acting along the longitudinal axis of the second connection member, is applied so as to fix the position of the clamping portion in relation to the body. When said lever is brought to said unfastening position, the force acting along the longitudinal axis of the second connection member is released so as to unfix the position of the clamping portion in relation to the body.

An advantage of having a lever which brings the clamping portion to a fixed position and an unfixed position by rotating said lever in relation to the body is that the support foot is arranged to facilitate a user-friendly mounting.

The second connection member may be a rod, or another elongated member which may extend between the rotation pin and the bracket.

The first connection member may be pivotably connected to the lever at a distance from a rotation point of the lever as seen in a plane normal to said rotation point of the lever, and wherein the fastening arrangement is provided in the form of an eccentric, wherein the first portion of the first connection member is configured, upon actuation of the lever, to be moved around the rotation point of the lever.

Thus, the lever and the first connection member does not have a common rotation point. By designing the lever and the first connection member such that they have different rotation points allows the lever to actuate a rotary motion of the first connection member and thereby also a linear movement of the rotation pin, arranged at the second portion of the first connection member, when said lever is rotated.

The term "eccentric" in the context of the present invention refers to a mechanism that convert rotary motion into linear reciprocating motion. In the present invention, this is enabled by the first portion's movement around the rotation point of the lever which causes the second portion to be moved within the guide. The movement of the second portion, caused by the rotation of the lever, allows the clamping portion to be set into the fixed position and the unfixed position relative to the body.

An advantage of having the fastening arrangement provided in the form of an eccentric is that it contributes to the user-friendly arrangement of the support foot. By merely rotating the lever, the clamping portion may be adjusted and fixated in relation to the body.

Another advantage is that by having the rotation pin arranged within the guide, the angle between a center line of the guide and a first line of the first connection member is ensured to always be greater than 180 degrees when said lever is arranged in its fastening position. The first line may refer to a line which extends between a first and second center point of the first connection member, wherein the first and second center point corresponds to a point at the first and second portion where the rotation pin and the lever are connected to the first connection member.

This result in that the clamping portion will be ensured to be in its fixed position when said lever is in said fastening position, and thereby the support foot's position in relation to the vehicle is secured and will remain stationary until the lever is brought to its unfastening position.

The support foot may comprise two guides arranged in parallel, wherein the rotation pin comprises two respective end portions arranged on opposite sides of the pin, and wherein each end portion is slidably arranged in a respective guide, such that the rotation pin is arranged between the two parallel guides.

It is to be understood that the two guides have the similar shape to allow the pin to smoothly be moved within the two guides.

By having two parallel guides, the stability of the support foot may be enhanced.

The rotation pin may comprise a through hole extending transverse to the axis of rotation of the rotation pin, and wherein the second connection member is arranged in said through hole. The transversally extending through hole allows the second connection member to be slidably arranged within the through hole of the rotation pin, thereby enabling the second connection member's position in relation to the rotation pin to be changed.

An advantage of having a changeable position of the second connection member, in its axial direction, is that the range of positions which the bracket may assume increases, such that the support foot may be mountable to different car models. However, the second connection member, in another embodiment, may be fixedly attached to the pin by e.g., glue or soldering.

The first distal end of the second connection member may extends through the through hole of the rotation pin, and it may be locked in a position relative to the pin by a locking pin.

In such an embodiment, the second connection member may comprise several adjustment holes arranged along its extension. The adjustment holes being through holes configured to receive the locking pin so as to lock the second connection member's position relative to the rotation pin.

Alternatively, the through hole of the rotation pin may be a threaded through hole, and wherein the second connection member may comprise a threaded portion arranged to engage the threaded through hole.

When the second connection member is arranged to engage with a threaded through hole of the rotation pin, the second connection member may be rotationally connected to the bracket and configured to be rotated around the longitudinal axis thereof so as to axially adjust the position of the bracket relative to the pin.

Rotationally connected refers to that the second connection member may rotate in relation to the bracket. This may be enabled by having the second connection member arranged in a threaded through hole or a through hole of the bracket.

To adjust the position, or more precisely, to adjust the distance between the bracket and the rotation pin, the second connection member may be rotated so as to be screwed towards the rotation pin or away from the rotation pin. The adjustable distance depends on the length of the threaded portion of the second connection member. The second connection member may be threaded along its whole axis, or the second connection member may be threaded partially along the axis.

The first connection member comprises a first side comprising the first portion attached to the lever, and an opposing second side comprising a third portion which may be attached to a further lever.

The two levers may be connected to each other such that actuation of one lever, i.e., rotating said lever, automatically rotates the other lever at the same time.

The first and second portion of the first connection member may be provided with a protrusion, such as a pin, extending transversally relative to the longitudinal extension of the first connection member.

By having two levers configured to be actuated so as to fix, and unfix, the position of the clamping portion enables the users to use a two-handed grip when clamping the support foot on to the roof of the vehicle which may enable easier handling of the support foot and allows the user to apply a greater force if needed.

The bracket may, at a contact point, be arranged to abut with an abutment portion of the body, the contact point being located along the longitudinal extension of the bracket between a first end, comprising the clamping portion, and a distal free end.

It is to be noted that the contact point of the bracket may be located anywhere anlong the longitudinal extension of the bracket and wherein the location of the contact point depends on the relative position of the bracket in relation to the body. The abutment portion of the body may be designed such that the bracket may, at a contact point, abut, and pivot relative to the abutment portion.

The abutment portion may form a part of the body such that the abutment portion and the body form a single unit.

By having the bracket abutting the abutment portion of the body, the bracket is supported by the body which strengthens the overall structure of the support foot.

Alternatively, the abutment portion and the body may be formed as separate units, where the abutment portion is connected to the body. In such case the abutment portion may by itself, or by flexibly adjust to the shape of the body, form a point of contact which may be a pointed corner or a rounded corner.

If the abutment portion is arranged to be a separate unit, the abutment portion may be made out of the same material as the bracket, or the abutment portion may be made of another material, such as a polymer.

The advantages discussed above with reference to the support foot are equally relevant to a load carrier bar for a vehicle roof comprising at least one support foot.

The clamping portion of the bracket may be arranged, relative to the load carrier bar, at an angle in the range of 35 to 75 degrees.

The angle range of the clamping portion, relative to the load carrier bar, is to be understood to be the angular adaptation range of the support foot, meaning that 35 degrees and 75 degrees are the extreme points, and the support foot may have an angle relative to the load carrier bar being within this range. It is to be understood that the angle of the bracket may be changed within this interval each time the clamping portion is in said open state.

It may be noted that the use of first, second, third, fourth, fifth, etc. are mainly to be seen as labels facilitating reading and that it does not necessarily mean that there need to be all the intervening numbers of portions present. It may e.g., be noted that it is contemplated to have a design where there is a first portion, a second portion, a third portion and a fifth portion, with the fourth portion being omitted. However, to facilitate reading, we have consistently used the numbering first, second, third, fourth, etc., as labels, and in a sense based on an embodiment including all conceivable portions.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of said element, device, component, means, step, etc., unless explicitly stated otherwise. The steps of any method disclosed herein do not have to be performed in the exact order disclosed, unless explicitly stated.

The invention may also in short be said to relate to a support foot for a load carrier adapted to be mounted on a vehicle roof, the support foot comprising: a body configured to be connected to the load carrier, and comprising a vehicle support surface configured to rest against a first surface of the vehicle; a bracket having a clamping portion configured to clamp a second surface of the vehicle, and a lever rotationally connected to the body and having a fastening position and an unfastening position, a first connection member and a second connection member, wherein the first connection member is attached to the lever and rotationally connected to the second connection member via a rotation pin; wherein the second connection member is connected to the bracket, wherein the rotation pin is slidably arranged in a guide so as to direct movement of the bracket in relation to the body and such that bringing of the lever to said fastening position moves the first connection member so as to apply a force acting along a longitudinal axis of the second connection member so as to fix the position of the clamping portion in relation to the body.

### Brief description of the drawings

The invention will by way of example be described in more detail with reference to the appended schematic drawings, which shows a presently preferred embodiment of the invention.
Fig. 1 is a schematic perspective view of a support foot connected to a load carrier bar and arranged on a vehicle roof.
Fig. 2 is a schematic view of the support foot, as shown in Fig. 1, seen from the side.
Fig. 3 is an exploded view of the support foot as shown in Figs. 1-2.
Fig. 4a is schematic perspective view of the support foot, as shown in Figs. 1-3, wherein the support foot is arranged in an unfixed state relative to the vehicle roof.
Fig. 4b is schematic perspective view of the support foot, as shown in Figs. 1-4a, wherein the support foot is arranged in a fixed state relative to the vehicle roof.
Fig. 5 is a schematic perspective view of the angular relation between two related lines in the fastening position of a lever of the support foot.

### Detailed description of preferred embodiments

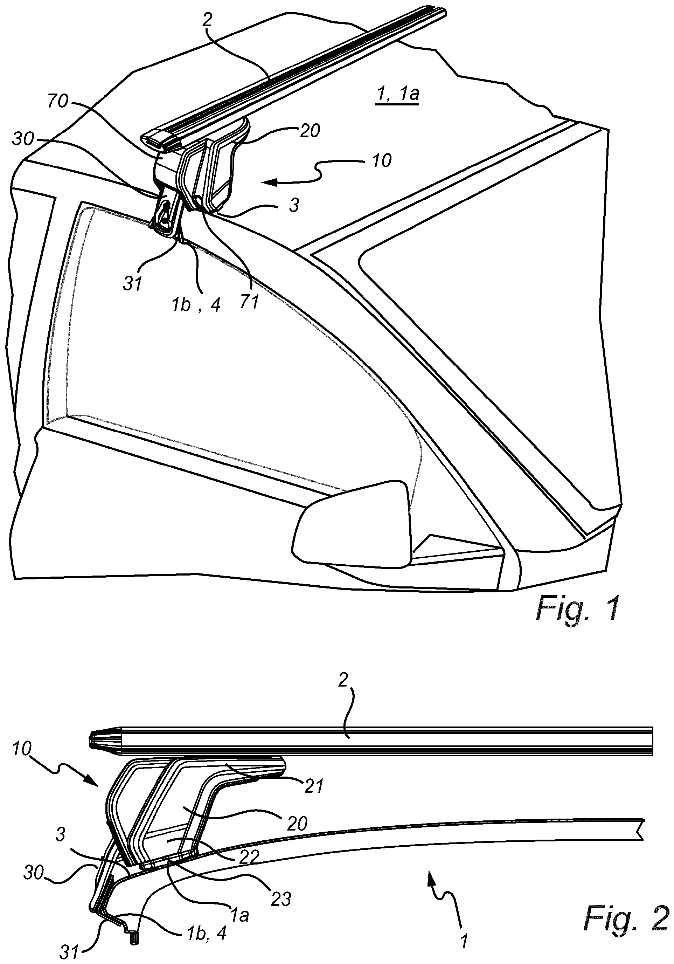

With reference to Figs. 1-5, there is disclosed a support foot 10 comprising a body 20 configured to be connected to a load carrier 2 and comprising a vehicle support surface 23 configured to rest against a first surface 1a of the vehicle. The support foot 10 further comprises a bracket 30 having a clamping portion 31 configured to clamp a second surface 1b of the vehicle 1, and a fastening arrangement 40. The fastening arrangement 40 comprises a lever 60 rotationally connected to the body 20 and having a fastening position and an unfastening position. The fastening arrangement 40 is configured such that bringing of the lever 60 to said fastening position moves a first connection member 41 so as to apply a force acting along a longitudinal axis L of a second connection member 50 so as to fix the position of the clamping portion 31 in relation to the body 20.

With reference to Fig. 1, the support foot is arranged on a roof of a vehicle 1 and connected to a load carrier 2. The clamping portion 31 is configured to clamp a second surface 1b of the vehicle, wherein the second surface 1b, as shown in Figs. 1, 2, 4a-b, is a surface arranged in the doorframe 4 of the vehicle chassis, as shown in Figs. 1-2.

The support foot 10 is mounted along an edge 3 of the vehicle roof extending in a longitudinal direction of the vehicle 1, and is configured to be connected to another support foot 10 arranged along an opposite edge 3 of the vehicle roof, via the load carrier 2.

As shown in Figs. 1-2, a cap 70 is arranged such that it at least covers the fastening arrangement 40 and wherein the cap 70 comprises a locking mechanism 71 configured to lock the cap's 70 position in relation to the support foot 10 for preventing unauthorized actuation of the lever 60.

The cap 70 may be pivotably or slidably connected to the support foot 10. Alternatively, the cap 70 may be separate from the support foot 10 and only connected when the locking mechanism 71 is engaged with the support foot 10.

The locking mechanism 71 has a locked state and an unlocked state. In the locked state the cap 70 is locked into position with the support foot 10, by some type of means for locking, e.g., a key, such that the fastening arrangement 40 is coved and thereby, unauthorized actuation of the lever 60 is prevented. In the unlocked state of the locking mechanism 71, the cap 70 may be removed from the support foot 10, or preferably moved such that the fastening arrangement and the bracket 30 of the support foot 10 is accessible to the user.

By having the cap 70 covering at least the fastening arrangement 40 the internal parts of the support foot 10 may be protected from external contamination and it may also provide a sleeker and more appealing appearance.

With reference to Fig. 2, the clamping portion 31 is in its fixed position in relation to the body 20 and the second surface 1b of the vehicle 1. The clamping portion 31 is arranged in one of the doorframes 4 of the vehicle chassis such that the load carrier 2 may be mounted on the vehicle roof without the need of a roof rail.

The body 20 have a first portion 21, which is an upper portion of the body 20 being connected to the load carrier 2 by e.g., screws, clamp holders, or any other type of commonly known load carrier fastening mechanism.

The vehicle support surface 23, arranged at a second portion 22 of the body 20, rest against the first surface 1a in the proximity of the longitudinally extending edge 3 of the first surface 1a of the vehicle 1.

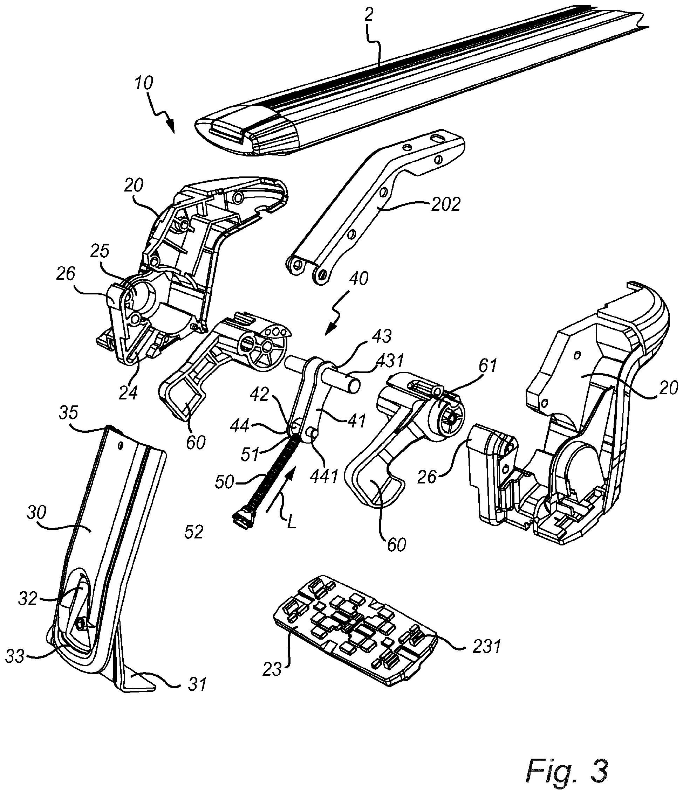

The vehicle support surface 23 may be a rubber detail which is interchangeable, as shown in Fig. 3. Alternatively, the vehicle support surface 23 and the body 20 are a single unit made out of the same material, e.g., stainless steel, aluminum, another type of metal, or plastic.

The clamping portion 31 may be releasably connected to the bracket 30 such that the clamping portion 31 is interchangeable so as to provide additional adaptation possibilities. This possibility may be desired if the support foot 10 is to be mounted on a special car model which differs significantly from other more common car models.

Alternatively, the clamping portion 31 and the bracket 30 may be a single unit.

With reference to Fig. 3, the different parts of one embodiment of the support foot are shown. The load carrier 2 is configured to be connected to the body 10 of the support foot by a connector 202.

To provide the interchangeable vehicle support surface 23, the support surface 23 comprises connecting protrusion 231 which are configured to be inserted to corresponding connection holes of the body 20. However, the vehicle support surface 23 may be connected to the body 20 in a different way, e.g., by the use of glue or screws.

The lever 60 is configured to be rotationally connected to the body 20 of the support foot 10 by a pin 61 protruding from the lever 60 and configured to be connected with an indentation 25 of the body 20. In an alternative embodiment, the lever 60 may be rotationally connected to the body 20 in another suitable configuration.

The support foot 10, as shown in Fig. 3, comprises two respective levers 60 which are configured to be pivotably connected to a respective first connection member 41 at a distance from a rotation point of the respective lever 60. Thus, the lever 60 and its respective first connection member 41 does not have a common rotation point.

The two levers 60 may be connected to each other such that actuation of one lever 60, i.e., rotating said lever 60, automatically rotates the other lever 60 at the same time.

The first connection members 41 have an elongated body which extends along the longitudinal axis L of the second connection member 50. As shown in the Figs. 3-5, the second connection member 50 is shaped as a rod.

The first connection members 41 comprises a first and second portion 43, 44 which are arranged at a respective opposite end portion of the elongated body of the respective first connection member 41.

The first portion 43 of the respective first connection member 41 is provided with a protrusion formed as a pin 431 extending transversally relative to the longitudinal extension of the first connection member 41. The first portion 43 of the first connection members 41 is configured to be attached to the respective lever 60 by the pin 431. Alternatively, the pin 431 may be a separate pin extending through a through hole of the first connection member 41 at the first portion 43.

The second portion 44 of the respective first connection member 41, as shown in Figs. 3-4b, is provided with a through hole. A rotation pin 42, comprising two respective end portions 42a, 42b arranged on opposite sides of the rotation pin 42, is arranged such that the end portions 42a, 42b extends through the through hole of the respective first connection member 41 such that they can be slidably arranged in a respective guide provided in the body.

Alternatively, the second portion 44 of the first connection member 41 may be provided with a protrusion formed as a pin extending transversally relative to the longitudinal extension of the first connection member 41 and configured to be slidably arranged in a guide 24.

Further, the second portion 44 of the respective first connection member 41 is rotationally connected to a first distal end 51 of the second connection member 50 via the rotation pin 42 having an axis of rotation transverse to the longitudinal axis L of the second connection member 50.

As shown in Fig. 3, the two respective first connection members 41 are arranged in parallel and are being connected to each other by the rotation pin 42.

The rotation pin 42 comprises a through hole extending transverse to the axis of rotation of the rotation pin 42, and wherein the second connection member 50 is arranged in said through hole. The through hole of the rotation pin 42, as shown in Figs. 3-4b, is a threaded through hole, and wherein the second connection member 50 comprises a threaded portion arranged to engage the threaded through hole.

When the second connection member 50 is arranged to engage with a threaded through hole of the rotation pin 42, as shown in Figs. 3-4b, the second connection member 50 is to be rotationally connected to the bracket 30 and configured to be rotated around the longitudinal axis L thereof so as to axially adjust the position of the bracket 30 relative to the pin 42.

Rotationally connected refers to that the second connection member 50 rotates in relation to the bracket 30. This may be enabled by having the second connection member 50 arranged in a threaded through hole or a through hole of the bracket 30 at a first point 32, as shown in Figs. 3-5.

The first point 32 of the bracket 30 is referred to be a connection point between the bracket 30 and the second connection member 50. The bracket 30, at its first point 32, is connected to the second connection member 50 at the second distal end 52 of the second connection member 50 being opposite the first distal end 51 connected to the rotation pin 42.

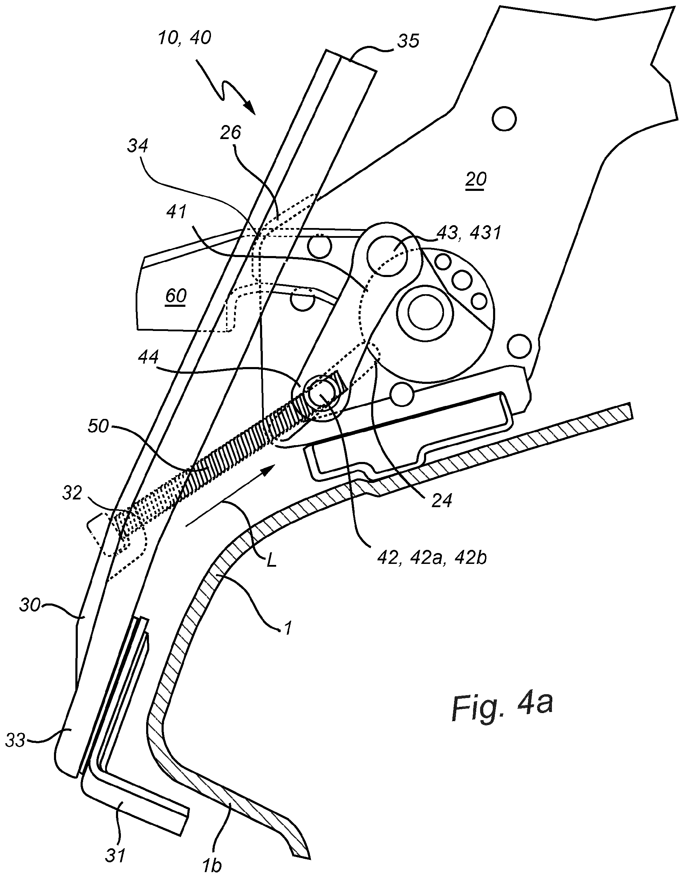

With reference to Figs. 4a-b, the supports foot 10 is shown in its unfastened and fastened, respectively, position relative to the vehicle roof 1.

A guide 24 is formed as a slit in the body 20 and extend in a longitudinal direction of the body 20, as shown in Figs. 3-5. The guide forms a track which the end portion 42a, 42b of the rotation pin 42 is arranged in. The rotation pin 42 is slidably arranged in the guide 24 so as to direct the movement of the bracket 30 in relation to the body 20.

The guide 24, as shown in Figs. 3-5, is linear. Alternatively, the guide 24 may be formed to have a curved, curvilinear, wavy, or any other suitable shape.

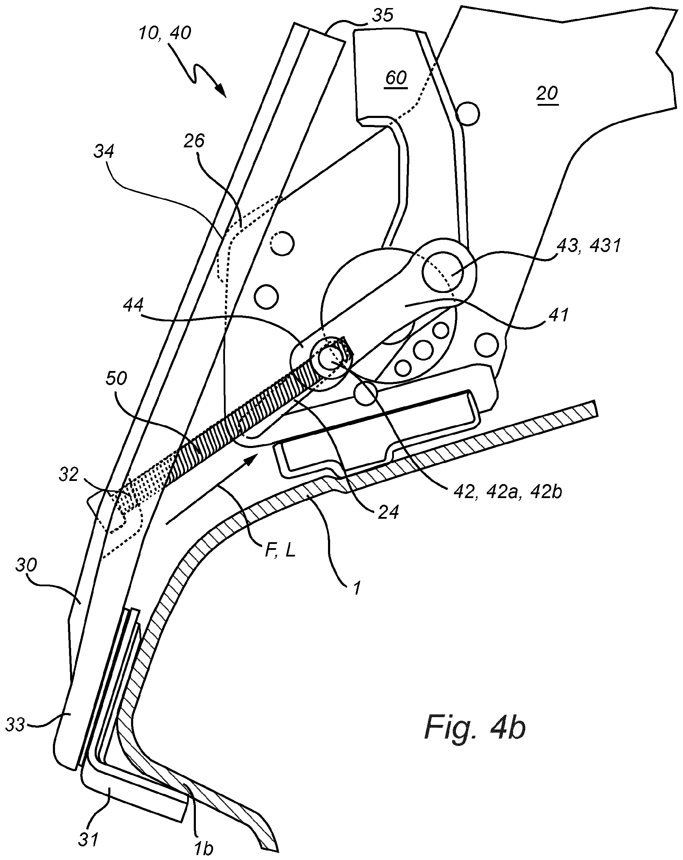

The lever 60 has an unfastening position, as shown in Fig. 4a, and a fastening position, as shown in Fig. 4b, so as to set the clamping portion 31 in a fixed position and an unfixed position. When said lever 60 is brought to said fastening position, the bracket 30 is moved towards the body 20 and a force F, acting along the longitudinal axis L of the second connection member 50, is applied so as to fix the position of the clamping portion 31 in relation to the body 20 and the second surface 1b of the vehicle 1. When said lever 60 is brought to said unfastening position, the bracket 30 is moved away from the body 20 and the force acting along the longitudinal axis of the second connection member 50 is released so as to unfix the position of the clamping portion 31 in relation to the body 20 and the second surface 1b of the vehicle 1.

The fixed and unfixed position of the clamping portion 31 is enabled by designing the lever 60 and the first connection member 41 such that they have different rotation points so as the fastening arrangement 40 is provided in the form of an eccentric.

The term "eccentric" in the context of the present invention refers to a mechanism that convert rotary motion into linear reciprocating motion. In the present invention, this is enabled by the first portion's 43, and thereby also the pin's 431, movement around the rotation point of the lever 60 upon actuation of the lever 60. The movement of the first portion 43 actuates a movement of the second portion 44 of the first connection member 41 and thereby also a movement of the rotation pin 42, arranged at the second portion 44.

Moreover, the distance between the bracket 30 and the rotation pin 42 may be adjusted by rotating the second connection member 50 so as to screw towards the rotation pin 42 or away from the rotation pin 42. The adjustable distance depends on the length of the threaded portion of the second connection member 50. The second connection member 50 may be threaded along its whole axis, as shown in Figs. 3-4b, or the second connection member 50 may be partially threaded along the axis.

By having a changeable position of the second connection member 50, in its longitudinal axis L, the range of positions which the bracket 30 may assume increases, such that the support foot 10 may be mountable to different car models.

As shown in Figs. 4a-5, the bracket 30, at a contact point 34, abuts an abutment portion 26 of the body 20. The contact point 34 being located along the longitudinal extension of the bracket 30 between a first end 33, comprising the clamping portion 31, and a distal free end 35.

The abutment portion 26 supports the bracket 30 at the contact point 34.

The abutment portion 26 of the body 20 being shaped with a rounded corner. In an alternative embodiment, not shown in any of the figures, the abutment portion 26 of the body 20 may be shaped as a pointed corner.

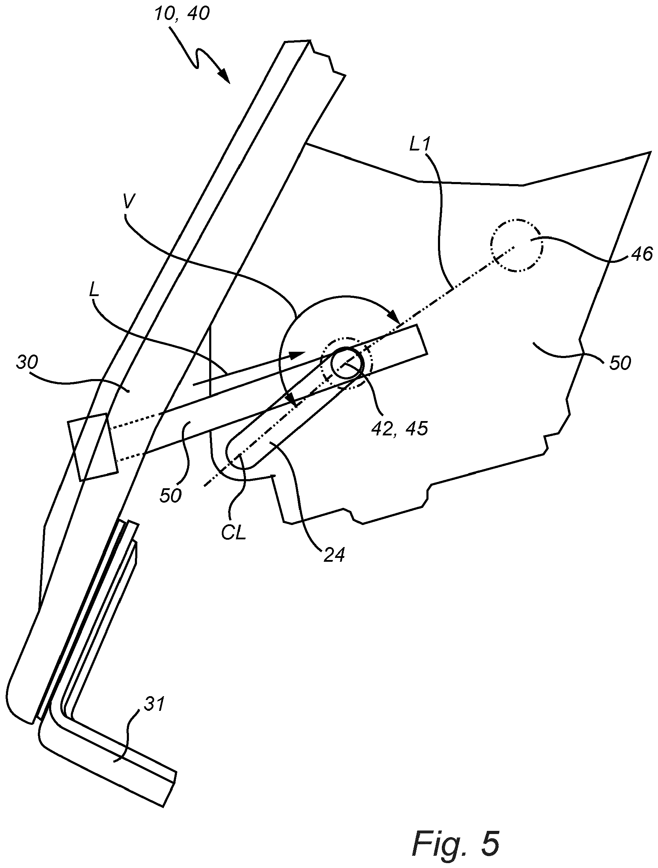

With reference to Fig. 5, the lever 60, not shown in the figure, is arranged in the fastening position and the angle V between a center line CL of the guide 24, which corresponds to the allowed movement of the rotation pin 42, and a and a first line L1, extending between a first and second center point 45, 46 of the first connection member 41, is greater than 180 degrees.

The first and second center point 45, 46 corresponds to the first and second portion 43, 44 where the rotation pin 42 and the lever 60 are connected to the first connection member 41.

When the angle is greater than 180 degrees, a traction force, acting along the longitudinal axis L of the second connection member 50, is created. The traction force pushes the lever 60 against the body 20 and thereby locking the lever 60, as well as the clamping portion 31, in its fixed position.

By having the rotation pin 42 arranged within the guide 24, the angle V between the center line CL of the guide 24 and the first line L1 of the first connection member 41 is ensured to always be greater than 180 degrees when said lever 60 is arranged in its fastening position. This result in that the clamping portion 31 will be ensured to be in its fixed position when said lever 60 is in said fastening position, and thereby the support foot's 10 position in relation to the vehicle 1 is secured and will remain stationary until the lever 60 is brought to its unfastening position.

When the lever 60 is arranged in the unfastened position, the angle V between the center line CL of the guide 24 and the first line L1 is less than 180 degrees. When the lever 60 is manually actuated and brought from said fastening position to said unfastening position, the force acting along the longitudinal axis L of the second connection member 50 becomes less than the torque caused by the manual rotation of the lever 60, and the clamping portion 31 is brought to the unfixed position.

Even though it is preferred that the support foot is designed in accordance with the disclosure in the detailed disclosure of preferred embodiments and the appended drawings, it should be noted that a specific preferred embodiment of a specific component does not necessarily have to be combined with a specific embodiment of another component. Thus, advantages associated with a specific embodiment, including one or more features, of a specific component may be accomplished even though the other components is/are designed in accordance with the more general disclosure under the summary of the invention rather than being defined in accordance with the specific embodiment disclosed in the detailed description.

It is contemplated that there are numerous modifications of the embodiments described herein, which are still within the scope of the invention as defined by the appended claims.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

## Claims

1. A support foot (10) for a load carrier (2) adapted to be mounted on a vehicle roof, the support foot (10) comprising:
a body (20) having a first portion (21) configured to be connected to the load carrier (2), and a second portion (22) comprising a vehicle support surface (23) configured to rest against a first surface (1a) of the vehicle (1);
a bracket (30) having a clamping portion (31) configured to clamp a second surface (1b) of the vehicle (1), and
a fastening arrangement (40), the fastening arrangement (40) comprising a lever (60) rotationally connected to the body (20) and having a fastening position and an unfastening position, a first connection member (41) and a second connection member (50), the second connection member (50) having a longitudinal axis (L), wherein the first connection member (41) comprises a first portion (43) attached to the lever (60) and a second portion (44) rotationally connected to a first distal end (51) of the second connection member (50) via a rotation pin (42) having an axis of rotation transverse to the longitudinal axis (L) of the second connection member (50);
wherein the second connection member (50), at a second distal end (52) thereof, is connected to the bracket (30), wherein the rotation pin (42) is slidably arranged in a guide (24) so as to direct movement of the bracket (30) in relation to the body (20) and wherein the fastening arrangement (40) is configured such that bringing of the lever (60) to said fastening position moves the first connection member (41) so as to apply a force acting along the longitudinal axis (L) of the second connection member (50) so as to fix the position of the clamping portion (31) in relation to the body (20).

2. A support foot (10) according to claim 1, wherein the first connection member (41) is pivotably connected to the lever (60) at a distance from a rotation point of the lever (60) as seen in a plane normal to said rotation point of the lever (60), and wherein the fastening arrangement is provided in the form of an eccentric, wherein the first portion (43) of the first connection member (41) is configured, upon actuation of the lever (60), to be moved around the rotation point of the lever (60).

3. A support foot (10) according to any one of the preceding claims, wherein the support foot (10) comprises two guides (24) arranged in parallel, wherein the rotation pin (42) comprises two respective end portions (42a, 42b) arranged on opposite sides of the rotation pin (42), and wherein each end portion (42a, 42b) is slidably arranged in a respective guide (24), such that the rotation pin (42) is arranged between the two parallel guides (24).

4. A support foot (10) according to any one of the preceding claims,
wherein the guide (24) is linear.

5. A support foot (10) according to any one of the preceding claims,
wherein the guide (24) is a slit.

6. A support foot (10) according to any one of the preceding claims,
wherein the rotation pin (42) comprises a through hole extending transverse to the axis of rotation of the rotation pin (42), and wherein the second connection member (50) is arranged in said through hole.

7. A support foot (10) according to claim 6, wherein the first distal end (51) of the second connection member (50) extends through the through hole of the rotation pin (42), and is locked in a position relative to the rotation pin (42) by a locking pin.

8. A support foot (10) according to claim 6, wherein the through hole of the rotation pin (42) is a threaded through hole, and wherein the second connection member (50) comprises a threaded portion arranged to engage said threaded through hole.

9. A support foot (10) according to claim 8, wherein the second connection member (50) is rotationally connected to the bracket (30) and configured to be rotated around the longitudinal axis (L) thereof so as to axially adjust the position of the bracket (30) relative to the rotation pin (42).

10. A support foot (10) according to any one of the preceding claims, wherein the first connection member (41) comprises a first side comprising the first portion (43) attached to the lever (60), and an opposing second side comprising a third portion attached to a further lever (60).

11. A support foot (10) according to any one of the preceding claims, wherein the bracket (30), at a contact point (34), is arranged to abut with an abutment portion (26) of the body (20), the contact point (34) being located along the longitudinal extension of the bracket (30) between a first end (33), comprising the clamping portion (31), and a distal free end (35).

12. A load carrier bar (2) for a vehicle roof comprising at least one support foot (10) according to claims 1-10.

13. A load carrier bar (2) according to claim 12, wherein the clamping portion (31) of the bracket (30) is arranged, relative to the load carrier bar (2), at an angle in the range of 35 to 75 degrees.
